# EUROPÄISCHE PATENTSCHRIFT

(11) **EP 1 217 335 B1**
(45) Veröffentlichungstag und Bekanntmachung des Hinweises auf die Patenterteilung: **20.07.2005**
(21) Anmeldenummer: 01129834.6
(22) Anmeldetag: 14.12.2001
(51) Int. Cl.: G01D 11/28, G01D 13/28, G12B 11/00

(54) **Anzeigeinstrument**
Display instrument
Instrument d'affichage

(30) Priorität: 21.12.2000 DE 10063875
(43) Veröffentlichungstag der Anmeldung: 26.06.2002
(73) Patentinhaber: SIEMENS AKTIENGESELLSCHAFT, 80333 München (DE)
(72) Erfinder: Breinich, Herbert, 65205 Wiesbaden (DE); Eschenbach, Bertram, 63934 Röllbach (DE); Mittenbühler, Karl-Heinz, 64347 Griesheim (DE); Vorberg, Sabine, 63743 Aschaffenburg (DE)

(56) Entgegenhaltungen:
- DE-A- 19 538 547
- JP-A- 55 071 985
- US-A- 2 410 064
- US-A- 2 831 453
- US-A- 4 380 043

## Beschreibung

Die Erfindung bezieht sich auf ein Anzeigeinstrument mit mindestens zwei übereinander liegenden, jeweils aus einem Kopf und einer Zeigerfahne bestehenden Leuchtzeigern, die unabhängig voneinander um eine gemeinsame Anzeigeachse drehbar sind, wobei die Leuchtzeiger aus einem lichtleitenden Material bestehen und jeweils eine Lichteintrittsfläche aufweisen und das dort eingekoppelte Licht an der dem Betrachter zugewandten Seiten der Zeigerfahnen austritt.

Derartige Anzeigeinstrumente haben sich insbesondere im Fahrzeugbau bewährt, da diese bei Dunkelheit eine sichere Ablesbarkeit gewähren: Die leuchtenden Zeigerfahnen heben sich für den Fahrer deutlich vor einem dunklen Zifferblatt mit ebenfalls leuchtenden Ziffern ab.

Der Aufwand der im Einzelnen getrieben wird, um die Lichtzeiger mit Licht zu versorgen, ist allerdings beträchtlich. Es werden Lichtleiter eingesetzt, um Licht von einer Lichtquelle im Gehäuse des Anzeigeinstrumentes zur Lichteintrittsfläche der Lichtzeiger zu leiten. Besonders schwierig wird der Aufbau, wenn das Anzeigeinstrument zwei Lichtzeiger aufweist, die übereinander angeordnet sind und eine gemeinsame Drehachse aufweisen.

Aus US 4,380,043 A ist ein Anzeigeinstrument mit mindestens zwei übereinander liegenden, jeweils aus einem Kopf und einer Zeigerfahne bestehenden Leuchtzeigern bekannt, wobei die Leuchtzeiger um eine gemeinsame Anzeige drehbar sind, aus lichtleitendem Material bestehen und jeweils eine Lichteintrittsfläche aufweisen. Das an der Lichteintrittsfläche angekoppelte Licht tritt an den dem Betrachter zugewandten Seiten der Zeigerfahnen aus. Weiterhin ist eine gemeinsame Lichtquelle vorhanden, die das Licht über einen Lichtteiler den Lichtzeigern zuführt.

Die bisher bekannten Anordnungen sind relativ kompliziert und haben außerdem den Nachteil, dass das Zifferblatt beleuchtende Streulicht auftritt, so dass der Kontrast der leuchtenden Lichtzeiger gegen den Zifferblatthintergrund abnimmt.

Die Erfindung beruht daher auf der Aufgabe, die Versorgung von Licht für zwei übereinander angeordnete Leuchtzeiger deutlich zu verbessern. Vor allem soll erreicht werden, dass Aufbau und Zusammenbau möglichst einfach ist und dass möglichst wenig Streulicht austritt.

Die Erfindung schlägt daher ein Anzeigeinstrument nach Anspruch 1 vor.

Dies ermöglicht einen sehr einfachen Aufbau, da die Antriebswelle eines Zeigers als Lichtleiter dient und ein Teil der Antriebswelle als Lichtteiler ausgebildet ist. Bei dieser Anordnung werden praktisch keine zusätzlichen Teile benötigt, da bei dieser Lösung ein schon vorhandenes Teil - nämlich die Antriebswelle - eine weitere Funktion übernimmt.

Um den Zusammenbau zu vereinfachen, kann es notwendig sein, den Lichtteiler als gesondertes Bauteil zu gestalten, das auf das Hauptteil der Antriebswelle aufgesteckt ist.

Der Lichtteiler ist so ausgebildet, dass ein Teil des in ihn eintretenden Lichtes in axialer Richtung weitergeführt und ein weiterer Teil des eintretenden Lichtes radial abgestrahlt wird. Dementsprechend hat ein (der obere) Lichtzeiger eine Lichteintrittsfläche, die das in Achsrichtung austretende Licht aufnimmt, wobei dieser Lichtzeiger mit seinem Kopf auf den Lichtteiler aufgesteckt ist, so dass das axial aus dem Lichtteiler austretende Licht in die an der Unterseite des Kopfes angeordnete Eintrittsfläche eingekoppelt wird. Desweiteren ist ein anderer (der untere) Zeiger, der in der Regel unter dem oberen Zeiger angeordnet ist, mit einer Lichteintrittsfläche versehen, die das seitlich austretende Licht aufnimmt.

Dazu ist der Kopf dieses Lichtzeigers als Ring ausgeführt, dessen innere Mantelfläche die Lichteintrittsfläche bildet und der koaxial zum Lichtteiler angeordnet ist.

Um die gewünschte Lichtteilung zu erreichen, ist der Lichtteiler zylindrisch ausgeführt, wobei in der oberen Stirnfläche am Ende der Antriebswelle eine axiale Vertiefung vorgesehen ist, die in einem Kegelstumpf endet. Dessen Grundfläche verläuft senkrecht zur Drehachse der Antriebswelle, so dass dort Licht in axialer Richtung austritt. Die Mantelfläche des Kegelstumpfes verläuft in einem Winkel von 45° zur Drehachse, so dass sie als Reflexionsfläche dient und das von unten in den Lichtteiler eintretende Licht zur Seite in radialer Richtung ablenkt. Ein Anteil des auf die Mantelfläche auftretenden Lichtes wird nicht reflektiert, sondern lediglich gebeugt und ebenfalls in im Wesentlichen axialer Richtung auf die Lichteintrittsfläche des oberen Zeigers geführt. Die Ausdehnungen von Mantelfläche und Grundfläche sind so aufeinander abgestimmt, dass beide Lichtzeiger in etwa zu gleichen Teilen mit Licht versorgt sind und damit gleich hell erscheinen.

Im Folgenden soll anhand eines Ausführungsbeispiels dargestellt in einer Figur die Erfindung näher erläutert werden.

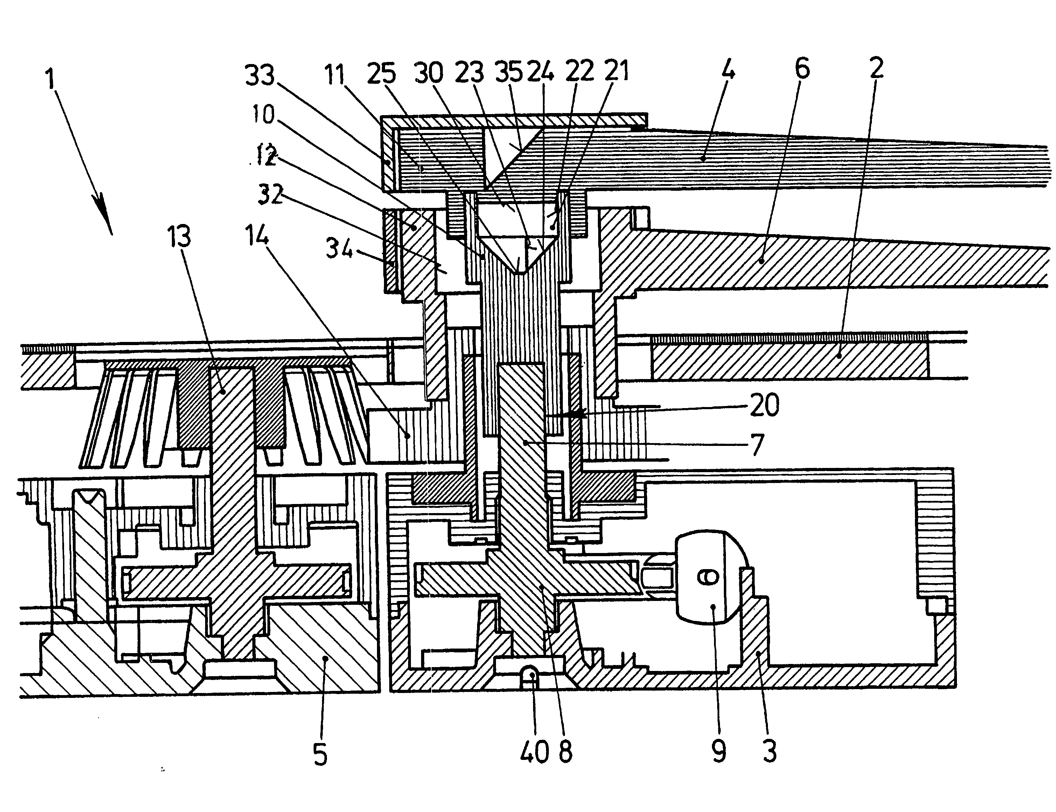

Die Figur zeigt einen Querschnitt durch ein Anzeigeinstrument 1. Unterhalb des Zifferblattes 2 befinden sich eine erste Antriebseinheit 3 für einen oberen Lichtzeiger 4 und eine zweite Antriebseinheit 5 für einen unteren Lichtzeiger 6, der unterhalb des oberen Lichtzeigers 4 angeordnet ist.

Die erste Antriebseinheit 3 ist mit dem oberen Lichtzeiger 4 über eine Antriebswelle 7 gekoppelt, die als Lichtleiter ausgeführt ist. Die Antriebswelle 7 besteht aus einem Hauptteil 8, das mittels eines Schneckenradgetriebes mit einem elektrischen Stellmotor 9 verbunden ist. Auf den Hauptteil 8 der Antriebswelle 7 ist der Lichtteiler 10 aufgesteckt, der damit als Verlängerung des Hauptteils 8 der Antriebswelle 7 fungiert. Auf das obere Ende des Lichtteilers 10 ist der obere Lichtzeiger 4 mit seinem Kopf 11 aufgesteckt.

Der Kopf 12 des unteren Lichtzeigers 6 ist als Ring ausgeführt, der koaxial zum Lichtteiler 10 liegt. Er wird von der Antriebswelle 13 der zweiten Antriebseinheit 5, die parallel zur Antriebswelle 7 der ersten Antriebseinheit 3 verläuft, über ein Zahnradgetriebe 14 angetrieben.

Der Lichtteiler 10 hat einen im Wesentlichen zylindrischen Körper, wobei in die untere Stirnfläche eine Bohrung 20 eingelassen ist, in der das obere Ende des Hauptteils 8 der Antriebswelle 7 eingesteckt ist.

In die obere Stirnseite ist eine Vertiefung 21 eingefügt, die einen zylindrischen Abschnitt 22 hat und weiter nach unten in einen Kegelstumpf 23 mit einer Mantelfläche 24 und einer Grundfläche 25 übergeht.

Die Lichtstrahlen, die durch die Antriebswelle 7 von unten nach oben hindurchgehen, treffen im Strahlzentrum auf die Grundfläche 25 und treten in axialer Richtung aus dem Lichtteiler 10 aus. Die radial weiter außen verlaufenden Lichtstrahlen treffen auf die Mantelfläche 24, die wie eine Reflexionsfläche wirkt, so dass diese Strahlen größtenteils in einem Winkel von 45° in radialer Richtung vom Lichtteiler 10 über seine äußere Mantelfläche abgestrahlt werden.

Ein Teil des Lichtes, das auf die Mantelfläche 24 trifft, wird nicht reflektiert sondern gebeugt und tritt ebenfalls in im Wesentlichen axialer Richtung aus dem Lichtteiler 10 aus.

Der Kopf 11 des oberen Lichtzeigers 4 weist eine Lichteintrittsfläche 30 auf, die sich oberhalb der Vertiefung befindet. Hier treffen die axialen Strahlen des Lichtteilers 10 auf und werden in den Lichtzeiger 4 eingekoppelt. Im Kopf befindet sich ein Ausschnitt mit einer schräg verlaufenden Reflexionsfläche 35. Von dort werden die Strahlen in die Zeigerfahne gelenkt, an dessen Oberfläche sie ggf. nach einer weiteren Reflexion am Boden der Fahne austreten.

Die innere Mantelfläche 32 des ringförmigen Kopfes 12 des unteren Lichtzeigers 6 liegt auf gleicher Höhe mit dem Kegelstumpf 23 der Vertiefung 21, so dass das seitlich austretende Licht in diese Mantelfläche 32 eintreten kann. Das Licht wird in alle Winkelbereiche abgestrahlt, wobei lediglich das Licht, das im Winkelbereich des Zeigers gerichtet ist, in die Zeigerfahne weitergeleitet wird und dort ebenfalls an der oberen Fläche der Fahne ggf. nach einer weiteren Reflexion am Boden der Fahne austritt.

Um Streulicht zu vermeiden, sind beide Zeigerköpfe mit Abdeckungen versehen: Auf den Kopf 11 des oberen Lichtzeigers 4 ist eine lichtundurchlässige Kappe gesetzt, die die Oberseite des Kopfes 11 und seine Seitenfläche abdeckt.

Am ringförmigen Kopf 12 des unteren Lichtzeigers 6 ist ein lichtundurchlässiger Abdeckring befestigt, der die äußere Mantelfläche ringförmig umgreift.

Das Licht zur Beleuchtung der Zeiger stammt von einer Leuchtdiode 40, die unterhalb des vom Lichtteiler 10 entfernten Endes der Antriebswelle 7 angeordnet ist und in die Stirnseite der Antriebswelle 7 Licht einkoppelt.

## Patentansprüche

1. Anzeigeinstrument mit mindestens zwei übereinander liegenden, jeweils aus einem Kopf und einer Zeigerfahne bestehenden Leuchtzeigern, die unabhängig voneinander um eine gemeinsame Anzeigeachse drehbar sind, wobei die Leuchtzeiger aus einem lichtleitenden Material bestehen und jeweils eine Lichteintrittsfläche aufweisen und das dort eingekoppelte Licht an der dem Betrachter zugewandten Seite der Zeigerfahnen austritt, wobei für mindestens zwei der Lichtzeiger (4, 6) eine gemeinsame Lichtquelle vorhanden ist und das Licht über einen Lichtteiler (10) den Lichtzeigern (4, 6) zugeführt ist, **dadurch gekennzeichnet, dass** die Antriebswelle (7) eines Zeigers als Lichtleiter dient und ein Teil der Antriebswelle (7) als Lichtteiler (10) ausgebildet ist.

2. Anzeigeinstrument nach Anspruch 1, **dadurch gekennzeichnet, dass** der Lichtteiler (10) mit dem Hauptteil (8) der Antriebswelle (7) zusammengesteckt ist.

3. Anzeigeinstrument nach Anspruch 1 oder 2, **dadurch gekennzeichnet, dass** im Lichtteiler (10) ein Teil des Lichtes in Richtung der Drehachse austritt und ein weiterer Teil senkrecht dazu.

4. Anzeigeinstrument nach Anspruch 3, **dadurch gekennzeichnet, dass** der obere Lichtzeiger (4) eine Lichteintrittsfläche (30) hat, die das in Achsrichtung austretende Licht aufnimmt, wobei dieser Lichtzeiger (4) auf den Lichtteiler (10) aufgesteckt ist.

5. Anzeigeinstrument nach Anspruch 4, **dadurch gekennzeichnet, dass** der untere Lichtzeiger (6) eine Lichteintrittsfläche aufweist, die das seitlich austretende Licht aufnimmt.

6. Anzeigeinstrument nach Anspruch 5, **dadurch gekennzeichnet, dass** der Kopf (12) des unteren Lichtzeigers (6) den Lichtteiler (10) ringförmig umgibt und die Lichteintrittsfläche an einer inneren Mantelfläche (32) im Kopf (12) ausgebildet ist.

7. Anzeigeinstrument nach einem der vorhergehenden Ansprüche, **dadurch gekennzeichnet, dass** der Lichtteiler (10) eine kegelstumpfförmige koaxiale Vertiefung (21) aufweist, wobei die Mantelfläche (24) des Kegelstumpfes (23) als Reflexionsfläche für das seitlich austretende Licht dient und die Grundfläche (25) als Austrittsfläche für das axial austretende Licht.

## Claims

1. Display instrument having at least two illuminated pointers which are located one on top of the other, are each composed of a head and a pointer lug and can be rotated independently of one another about a common display axis, the illuminated pointers being composed of a light-guiding material and each having a light entry face, and the light injected there exiting on the side of the pointer lugs facing the viewer, for at least two of the illuminated pointers (4, 6) there being a common light source, and the light being fed to the illuminated pointers (4, 6) via a light splitter (10), **characterized in that** the drive shaft (7) of a pointer serves as a light guide and a portion of the drive shaft (7) is embodied as a light splitter (10).

2. Display instrument according to Claim 1, **characterized in that** the light splitter (10) is plugged together with the main part (8) of the drive shaft (7).

3. Display instrument according to Claim 1 or 2, **characterized in that**, in the light splitter (10), one portion of the light exits in the direction of the axis of rotation and a further portion exits perpendicular thereto.

4. Display instrument according to Claim 3, **characterized in that** the upper illuminated pointer (4) has a light entry face (30) which picks up the light exiting in the axial direction, this illuminated pointer (4) being plugged onto the light splitter (10).

5. Display instrument according to Claim 4, **characterized in that** the lower illuminated pointer (6) has a light entry face which picks up the laterally exiting light.

6. Display instrument according to Claim 5, **characterized in that** the head (12) of the lower illuminated pointer (6) surrounds the light splitter (10) in an annular shape and the light entry face is embodied on an inner generated surface (32) in the head (22).

7. Display instrument according to one of the preceding claims, **characterized in that** the light splitter (10) has a frustum-shaped coaxial depression (21), the generated surface (24) of the frustum (23) serving as a reflection face for the laterally exiting light and the base face (25) serving as an exit face for the axially exiting light.

## Revendications

1. Instrument à aiguille comportant au moins deux aiguilles luminescentes superposées l'une à l'autre et composées chacune d'une tête et d'une palette d'aiguille, qui peuvent tourner indépendamment l'une de l'autre autour d'un axe commun, où les aiguilles luminescentes sont composées d'une matière guidant la lumière et comportent chacune une surface d'entrée de la lumière et où la lumière qui y est couplée sort des côtés des palettes d'aiguille tournées vers l'observateur, où il existe une source commune de lumière pour au moins deux des aiguilles luminescentes (4, 6) et où la lumière est guidée vers les aiguilles luminescentes (4, 6) à travers un séparateur de lumière (10), **caractérisé par le fait que** l'arbre d'entraînement (7) d'une aiguille sert de guide optique et une partie de l'arbre d'entraînement (7) est conçue comme séparateur de lumière (10).

2. Instrument à aiguille selon la revendication 1 **caractérisé par le fait que** le séparateur de lumière (10) est assemblé par enfichage avec la partie principale (8) de l'arbre d'entraînement (7).

3. Instrument à aiguille selon la revendication 1 ou 2 **caractérisé par le fait que**, dans le séparateur de lumière (10), une partie de la lumière sort dans la direction de l'axe de rotation et une autre partie dans le sens perpendiculaire.

4. Instrument à aiguille selon la revendication 3 **caractérisé par le fait que** l'aiguille luminescente supérieure (4) a une surface d'entrée de la lumière (30), qui absorbe la lumière sortant dans la direction de l'axe, cette aiguille luminescente (4) étant enfichée sur le séparateur de lumière (10).

5. Instrument à aiguille selon la revendication 4 **caractérisé par le fait que** l'aiguille luminescente inférieure (6) a une surface d'entrée de la lumière qui absorbe la lumière sortant latéralement.

6. Instrument à aiguille selon la revendication 5 **caractérisé par le fait que** la tête (12) de l'aiguille luminescente inférieure (6) enveloppe en forme d'anneau le séparateur de lumière (10) et que la surface d'entrée de la lumière est formée dans la tête (12) sur une surface latérale intérieure (32).

7. Instrument à aiguille selon l'une des revendications précédentes **caractérisé par le fait que** le séparateur de lumière (10) comporte un évidement coaxial (21) en forme de cône tronqué, la surface latérale (24) du cône tronqué (23) servant de surface réfléchissante pour la lumière sortant latéralement et la surface de base (25), de surface de sortie pour la lumière sortant axialement.
